# EUROPEAN PATENT SPECIFICATION

(11) **EP 0 579 436 B1**
(45) Date of publication and mention of the grant of the patent: **18.12.1996**
(21) Application number: 93305284.7
(22) Date of filing: 06.07.1993
(51) Int. Cl.: B60C 11/00, B29D 30/06

(54) **Process for the formation of tread pattern**
Verfahren zum Herstellen von Laufflächenprofil
Procédé pour la réalisation de profil de bande de roulement

(30) Priority: 14.07.1992 JP 209698/92
(43) Date of publication of application: 19.01.1994
(73) Proprietor: BRIDGESTONE CORPORATION, Tokyo 104 (JP)
(72) Inventor: Kato, Yuji, Kodaira City, Tokyo (JP)
(74) Representative: Whalley, Kevin

(56) References cited:
- EP-A- 0 451 832
- DE-A- 3 218 219
- DE-A- 3 630 590
- DE-A- 4 041 524
- US-A- 2 255 994
- US-A- 2 808 867

## Description

This invention relates to a process for the formation of a tread pattern having many sipes.

In general, a pneumatic tire is built by arranging a green tire in a curing mold and then curing at a high temperature under a high pressure for a given time. In this case, the curing mold is usually a split mold formed by substantially dividing the mold into a plurality of equal sector members in the circumferential direction of the mold, e.g. a split mold consisting of 9 sector members.

In this type of pneumatic tire, many sipes are formed in the tread portion of the tire in which each of the sipes has a circumferential component (at least a part of the sipe is inclined with respect to the axial direction of the tire). Further, when the tread pattern is constructed by properly arranging plural kinds of pitch segments having different pitch lengths in the circumferential direction of the tire, the positions of the sipes on the circumference of the tire are irregular, so that it is very difficult to prevent intersection of the inclined sipe to the dividing position of the split mold and hence some of the sipes always intersect with the dividing positions. In the case of intersecting the sipe with the dividing position of the sector member, excessive stress is applied to sipe-forming blades arranged on the inner surface of the sector member to deform the blade. In the conventional technique, therefore, there is proposed the removal of the blade intersecting with the dividing position of the sector member, or the reduction of the blade height.

In the former case, the sipes are not formed at some positions on the circumference of the tire, so that there is caused a problem that the visible appearance of the tire tread is considerably degraded. In the latter case, shallow sipes formed by the low-height blades disappear at an initial wearing stage, which causes a problem that the disappeared portion of the sipe forms a nucleus for promoting irregular wear.

It is, therefore, an aim of the present invention to provide a process for the formation of a tread pattern capable of preventing the intersection of the dividing position of the sector member with the sipe (or the sipe-forming blade).

The present invention provides a process for the formation of a tread pattern by successively arranging a plurality of pitch segments having a plurality of pitch lengths, each pitch segment being provided with at least three sipes so that each sipe has a circumferential component and both ends thereof terminate inside both ends of the pitch segment, in a tread portion having at least two main grooves in the circumferential direction of the tire, which comprises the steps of:
determining first combinations of pitch segments in which the sum of pitch lengths of the pitch segments, having a plurality of pitch lengths, is substantially coincident with the circumference of the tire tread, and determining the number of pitch segments of each pitch length;
determining second combinations of pitch segments in which the sum of pitch lengths of the pitch segments, having a plurality of pitch lengths, is substantially coincident with the inner peripheral length of a sector member among a plurality of sector members formed by substantially equally dividing a split mold used in the tire vulcanization; and
adding up the second combinations of all the sector members constituting the split mold to determine third combinations of pitch segments in which the sum of said second combinations of pitch segments coincides with said number of pitch segments of each pitch length.

It is intended to conduct the formation of the tread pattern according to the invention in the tire, the tread portion is provided with at least two main grooves to divide the tread into at least three land portions. Then, the tread pattern is formed by successively arranging pitch segments having a plurality of pitch lengths on the tread portion in the circumferential direction of the tread. In this case, each of these pitch segments is provided with at least three sipes (one or more sipes are usually formed in one of the land portions), so that the tread portion contains many sipes as a whole. Each of these sipes has a circumferential component (at least a part of the sipe is inclined with respect to the axial direction of the tire) and both ends thereof terminate inside both ends of the pitch segment (the sipe never intersects with the boundary of the pitch segment). In the formation of the tread pattern, a plurality of pitch segments having a plurality of pitch lengths are firstly and properly selected so as to substantially match with the circumference of the tire tread (there is no restriction on the kind of pitch length and the number of pitch segments) to compare the sum of the pitch lengths of the selected pitch segments with the circumference of the tread. This procedure is repeated to determine at least one of first combinations of pitch segments having a plurality of pitch lengths (the kind of pitch length and the number of pitch segments) in which the sum of pitch lengths is substantially coincident with the circumference of the tread, and at least one of the numbers of the pitch segments of each pitch length. On the other hand, a plurality of pitch segments having a plurality of pitch lengths are properly selected so as to substantially match with the inner peripheral length of a sector member among a plurality of sector members formed by substantially equally dividing a split mold used in the tire vulcanization (there is no restriction on the kind of pitch length and the number of pitch segments) to compare the sum of pitch lengths of the selected pitch segments with the inner peripheral length of the sector member. This procedure is repeated to determine at least one of second combinations of pitch segments (the kind of pitch length and the number of pitch segments) in which the sum of pitch lengths is substantially coincident with the inner peripheral length of the sector member. Next, the second combinations are properly added up by the same number as the number of the sector members constituting the split mold to compare the sum of the second combinations with the above number of pitch segments of each pitch length. This procedure is repeated to determine third combinations of pitch segments in which the sum of the second combinations is coincident with the number of pitch segments of each pitch length. In the thus formed tread pattern, the dividing position for the sector member always locates on the boundary of the pitch segment, so that even if the sipe has a circumferential component, the sipe never intersects with the dividing position for the sector member because both ends of the sipe formed in the pitch segment terminate inside both circumferential ends of the pitch segment. Thus, there are prevented the case that the sipe is partly cut off, the case that some sipes are prematurely worn to promote irregular wear, and the like. Furthermore, the existing split mold consisting of substantially equally divided sector members can be used as it is.

In a preferred embodiment of the invention, the pitch segments of each sector member are properly selected based on the above third combinations and arranged in the circumferential direction, from which an arrangement of repeatedly changing the pitch length of the pitch segment in the order of minimum, maximum, minimum .... is determined. In this case, the pitch length of the pitch segment may be changed, or the pitch length in a group consisting two or more pitch segments may be changed as mentioned above. Thus, the pitch segments having largely different pitch lengths are not adjoined to each other, so that the visible appearance is improved and the tire noise becomes white noise.

The invention will be further described, by way of example only, with reference to the accompanying drawings, wherein:
Fig. 1 is a partly developed view of a first embodiment of the tread pattern according to the invention; and
Fig. 2 is a schematic view illustrating arrangements of pitch segments in a tread pattern and an inner peripheral surface of a split mold.

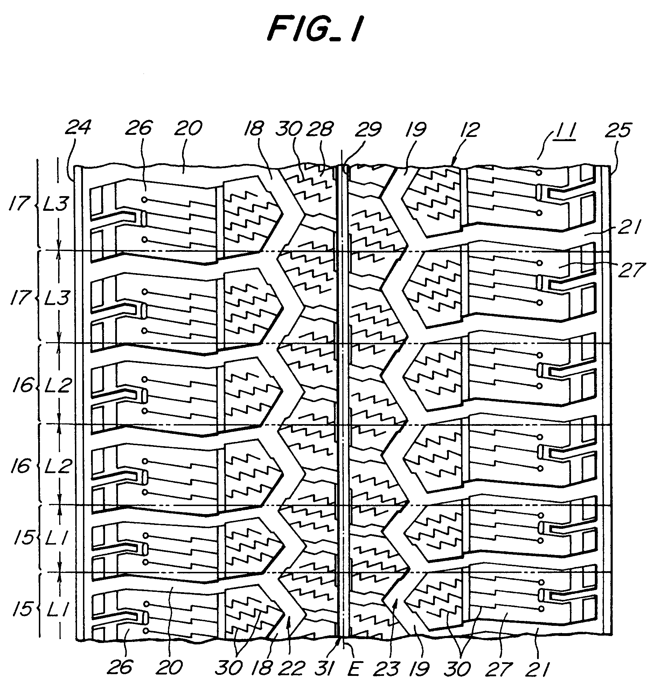

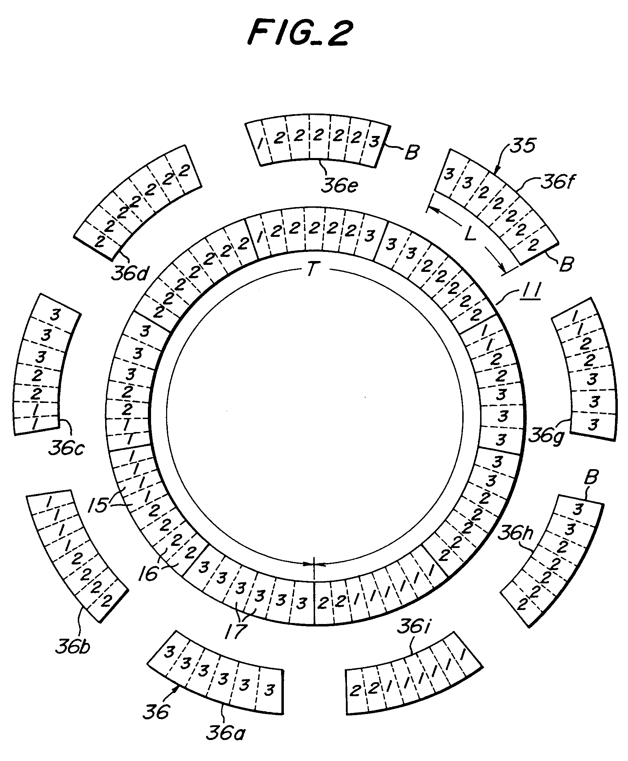

In Figs. 1 and 2, numeral 11 is a pneumatic tire having good performances on ice and snow (tire size: 175/70 R13). In this tire 11, a tread portion 12 has a tread pattern formed by successively arranging many pitch segments having a plurality of pitch lengths, for example, first pitch segments 15, second pitch segments 16 and third pitch segments 17 (corresponding to numerals 1, 2, and 3 in Fig. 2) having a ratio of pitch lengths L1:L2:L3 of 8.5:10.0:11.5 (10.0 corresponds to 28.44 mm) in the circumferential direction of the tire. The first, second and third pitch segments 15, 16, 17 have substantially the same shape in which main groove portions 18, 19 (two in total) each having a doglegged shape are formed at both sides with respect to the widthwise center of the segment and lateral grooves 20, 21 extending substantially in a lateral direction are formed between the main groove portion 18, 19 and each widthwise end of the segment. Since the first, second and third pitch segments 15, 16, 17 are successively arranged in the circumferential direction as mentioned above, the main groove portions 18 and 19 communicate with each other in the circumferential direction, respectively to form at least two main grooves (two zigzagged main grooves 22, 23 in this embodiment) in the tread portion 12, while many lateral grooves 20, 21 are arranged at given intervals in the circumferential direction of the tire.

As a result, many blocks 26, 27 are defined between the main groove 22, 23 and the end of the tread (each widthwise end 24, 25) by the main grooves 22, 23 and the lateral grooves 20, 21, while a rib 28 continuously extending in the circumferential direction is defined between the main grooves 22 and 23. In the rib 28, a narrow-width circumferential groove 31 extending in the circumferential direction is defined on an equatorial plane E of the tire by communicating circumferential groove portions 29 formed at the widthwise centers of the first, second and third pitch segments 15, 16, 17. Thus, almost three land portions, i.e. parts of the blocks 26, 27 and rib 28, are formed by the main grooves 22, 23 in each of the first, second and third pitch segments 15, 16 and 17. Furthermore, one or more sipes 30 are formed in each part of the blocks 26, 27 and the rib 28 in each of the first, second and third pitch segments (three or more sipes in total). In the illustrated embodiment, 18 sipes in total are formed in each of the pitch segments. As a result, many sipes 30 are formed in the whole of the tire. Each of the sipes 30 has a circumferential component or at least a part of the sipe is inclined with respect to the axial direction of the tire 11.

The tire 11 having the aforementioned tread pattern is built by arranging a green tire in a vulcanization mold 35 and vulcanizing it at a high temperature under a high pressure for a given time. In general, the vulcanization mold 35 used is a split mold consisting of a plurality of sector members 36 formed by dividing the split mold into substantially equal parts (9 sector members in this embodiment). Even when many sipes 30 each having a circumferential component are formed in the tread portion 12 of the tire 11 as mentioned above, in order not to intersect the sipe 30 with a dividing position B for the sector member 36 in the vulcanization, it is necessary that both ends of each sipe 30 are terminated inside both circumferential ends of each of the first, second and third pitch segments 15, 16, 17 (boundaries between adjoining pitch segments 15, 16, 17) and the dividing position B for the sector member 36 is located at any boundary between the adjoining pitch segments (15, 16, 17), whereby components of the sipe are not intersected with the boundary between the adjoining pitch segments.

For this purpose, the number of each of the first, second and third pitch segments 15, 16, 17 (there is no restriction on the kind of pitch length and the segment number) is firstly and properly selected so as to substantially match the total pitch length with a tread circumference T naturally settled in accordance with the size of the tire 11 (substantially the same as the inner peripheral length of the vulcanization mold 35 and being 1828.4 mm in this embodiment) to compare the total pitch length of the selected pitch segments 15, 16, 17 with the tread circumference T. If the total pitch length in a combination of pitch segments 15, 16, 17 is different from the tread circumference T, such a combination is eliminated, while if the total pitch length in a combination of pitch segments 15, 16, 17 is the same as the tread circumference T, such a combination is stored. Such an operation is repeatedly conducted by means of a computer to determine at least one of first combinations of pitch segments 15, 16, 17 (kind and number) in which the total pitch length is substantially coincident with the tread circumference T and at least one of numbers of pitch segments 15, 16, 17 of each pitch length. As such a first combination substantially coincident with the tread circumference, there is, for example, a combination in which the number of the first pitch segments 15 is 15 and the total pitch length thereof is 362.55 mm, and the number of the second pitch segments 16 is 32 and the total pitch length thereof is 910.08 mm, and the number of the third pitch segments 17 is 17 and the total pitch length thereof is 555.73 mm, and the total of these total pitch lengths is 1828.4 mm corresponding to the tread circumference T.

Then, the number of first, second and third pitch segments 15, 16, 17 (there is no restriction on the kind of pitch length and the number) are properly selected so as to substantially match the total pitch length with an inner peripheral length L of a sector member 36 constituting the split mold (corresponding to 1/9 of the inner peripheral length of the vulcanization mold 35 in this embodiment and being 203.2 mm) to compare the total pitch length of the selected pitch segments 15, 16, 17 with the inner peripheral length L of the sector member 36. If the total pitch length in a combination of pitch segments 15, 16, 17 is different from the inner peripheral length L, such a combination is eliminated, while if the total pitch length in a combination of pitch segments 15, 16, 17 is the same as the inner peripheral length L, such a combination is stored. Such an operation is repeatedly conducted by means of a computer to determine at least one of second combinations of pitch segments 15, 16, 17 (kind and number) in which the total pitch length is substantially coincident with the inner peripheral length L. As such a second combination substantially coincident with the inner peripheral length, there are, for example, a combination in which the number of the first pitch segments 15 is 2 and the total pitch length thereof is 48.34 mm, and the number of the second pitch segments 16 is 2 and the total pitch length thereof is 56.88 mm, and the number of the third pitch segments 17 is 3 and the total pitch length thereof is 98.07 mm; and a combination in which the number of the first pitch segments 15 is 4 and the total pitch length thereof is 96.68 mm, and the number of the second pitch segments 16 is 4 and the total pitch length thereof is 113.76 mm. In these combinations, a total of these total pitch lengths (203.3 mm in the former case and 210.44 mm in the latter case) is within substantially the same range as the inner peripheral length L of the sector member 36 (203.2 mm as mentioned above), or within a range of the inner peripheral length L ± 0.56% of the length L (i.e. a range of a dividing angle of a split mold 35 ± 2°) not causing degradation of the tire uniformity.

Proper combinations of pitch segments are selected from the second combinations of pitch segments 15, 16, 17 determined from the inner peripheral length L of the sector member 36 by the same number as the number of sector members 36 (6 members in this embodiment) and added up to determine total number of each of the first, second and third pitch segments 15, 16, 17. For example, when a combination of 0,0,6, a combination of 4,4,0, a combination of 2,2,3, a combination of 0,7,0, a combination of 1,5,1, a combination of 0,5,2, a combination of 2,2,3, a combination of 0,5,2 and a combination of 6,2,0 are selected as a combination of numbers of first, second and third pitch segments, the total number of the first pitch segments 15 is 15, and the total number of the second pitch segments 16 is 32, and the total number of the third pitch segments 17 is 17. Thereafter, the thus determined total number of each of the first, second and third pitch segments 15, 16, 17 is compared with the number of each of the first, second and third pitch segments 15, 16, 17 of each pitch length determined from the tread circumference T, whereby a combination in which both the numbers are different in anyone of the first, second and third pitch segments 15, 16, 17 is eliminated and a combination in which both the numbers are completely coincident with each other is stored. Such an operation is repeatedly conducted by means of a computer to determine third combinations of pitch segments in which the total number of each of the pitch segments 15, 16, 17 is coincident with the number of pitch segments 15, 16, 17 of each pitch length. This embodiment shows a third combination in which both the numbers are completely coincident with each other. When one combination is selected from the third combinations and applied to the split mold 35, it is distributed to each of the sector members 36 as a combination unit of pitch segments determined with respect to the inner peripheral length L of the sector member 36. In this embodiment, for example, the combination of 0,0,6 is applied to a sector member 36a, the combination of 4,4,0 is applied to a sector member 36b, the combination of 2,2,3 is applied to a sector member 36c, the combination of 0,7,0 is applied to a sector member 36d, the combination of 1,5,1 is applied to a sector member 36e, the combination of 0,5,2 is applied to a sector member 36f, the combination of 2,2,3 is applied to a sector member 36g, the combination of 0,5,2 is applied to a sector member 36h and the combination of 6,2,0 is applied to a sector member 36i. Moreover, the arrangement of the first, second and third pitch segments 15, 16, 17 is free in each sector member 36, but an arrangement of pitch segments as mentioned below is preferable.

When the tread pattern is determined as mentioned above, the dividing position B for the sector member 36 always locates on a boundary between the pitch segments 15, 16, 17, so that even if the sipe 30 has a circumferential component, it never intersects with the dividing position for the sector member 36 because both ends of each sipe 30 formed in each of the first, second and third pitch segments 15, 16, 17 terminate inside both circumferential ends of each pitch segment as previously mentioned. Thus, there are prevented the case that the sipe 30 is partly lacking, and the case that a part of the sipe 30 is prematurely worn to promote irregular wear, and the like. Furthermore, the equally divided sector members 36 usually used in the conventional technique can be used as they are.

It is preferable to determine the relationship between the third combination and the sector member 36 and the circumferential arrangement of the first, second and third pitch segments 15, 16, 17 in the split mold 35 by the following operation. That is, one combination is selected from the third combinations and applied to the sector member 36, while the number of the pitch segments 15, 16, 17 in each sector member 36 is properly selected and arranged in the circumferential direction. Such an operation is conducted by means of a computer with respect to all sector members 36 (9 sector members) to determine an arrangement for successively and repeatedly changing the pitch length in the order of minimum, maximum, minimum ...., i.e. an arrangement in the order of first pitch segment, second pitch segment, third pitch segment, second pitch segment, first pitch segment. In this case, the pitch length of the pitch segment may be changed in the order of, for example, 1, 2, 3, 2, 1, 2, 3, .... as mentioned above, or the pitch lengths in a group consisting of two or more pitch segments may be changed in the order of, for example, 1, 1, 2, 2, 3, 3, 3, 2, 2, 2, 1, 1, 1, 2, 2, 2, 3, 3 ... as mentioned above. Thus, the pitch segments 15, 17 having a largely different pitch length are not adjoined to each other, so that the visible appearance is improved and also the tire noise becomes white noise. Furthermore, it is preferable that when the tread portion 12 is equally or unequally divided into a plurality of circumferential regions, the same pitch segment arrangement is selected from the above arrangements in the circumferential regions having equal circumferential length as a tread pattern, whereby the tire noise is further rendered into white noise and is hardly recognized as a noise.

The invention will be described with respect to the following test example.

In this test, there are provided a comparative tire in which some sipes intersect with 3 dividing positions for 9 sector members constituting a split mold and have a depth corresponding to 30% of the depth of the other sipe, and an invention tire having a tread pattern determined based on the aforementioned embodiment so as not to intersect the sipe with any dividing position for the sector member. These tires have a tire size of 175/70 R13 and a tread pattern as shown in Fig. 1. Each of these tires is inflated under an internal pressure of 1.9 kgf/cm² and run on a drum at a speed of 60 km/hr under a load of 405 kg over a distance of 3 km. After the running, an occurrence state of irregular wear is observed and the resistance to irregular wear is evaluated by a ten-point process. As a result, the resistance to irregular wear is improved in the invention tire by two points as compared with the comparative tire.

As mentioned above, according to the invention, the intersection of the sipe with the dividing position for the sector member constituting the split mold can be prevented, so that the visible appearance and the resistance to irregular wear can be improved.

## Claims

1. A process for the formation of a tread pattern by successively arranging a plurality of pitch segments (15,16,17) having a plurality of pitch lengths (L1,L2,L3), each pitch segment being provided with at least three sipes (30) so that each sipe has a circumferential component and both ends thereof terminate inside both ends of the pitch segment, in a tread portion (12) having at least two main grooves (22,23) in the circumferential direction of the tire, which comprises the steps of:
determining first combinations of pitch segments in which the sum of pitch lengths of the pitch segments, having a plurality of pitch lengths, is substantially coincident with the circumference (T) of the tire tread, and determining the number of pitch segments of each pitch length (L1,L2,L3);
determining second combinations of pitch segments in which the sum of pitch lengths of the pitch segments, having a plurality of pitch lengths, is substantially coincident with the inner peripheral length (L) of a sector member (36) among a plurality of sector members formed by substantially equally dividing a split mold (35) used in the tire vulcanisation; and
adding up the second combinations of all the sector members (36) constituting the split mold (35) to determine third combinations of pitch segments in which the sum of said second combinations of pitch segments coincides with said number of pitch segments of each pitch length (L1,L2,L3).

2. A process as claimed in claim 1, characterized in that the pitch segments of each sector member are properly selected based on the third combinations and arranged in the circumferential direction, from which an arrangement of repeatedly changing the pitch length of the pitch segment in the order of minimum, maximum, minimum ... is determined.

## Patentansprüche

1. Verfahren zur Bildung eines Laufflächenmusters durch aufeinanderfolgende Anordnung einer Vielzahl von Teilungssegmenten (15, 16, 17), die eine Vielzahl von Teilungslängen (L1, L2, L3) haben, wobei jedes Teilungssegment so mit mindestens drei Einschnitten (30) versehen ist, daß jeder Einschnitt eine Umfangskomponente hat, und beide Enden des Einschnitts innerhalb beider Enden des Teilungssegments enden, in einem Laufflächenbereich (12), der mindestens zwei Hauptrillen (22, 23) in der Umfangsrichtung des Reifens hat, wobei das Verfahren die folgenden Schritte aufweist:
Bestimmen erster Kombinationen von Teilungssegmenten, bei denen die Summe der Teilungslängen der Teilungssegmente, die eine Vielzahl von Teilungslängen haben, im wesentlichen mit dem Umfang (T) der Reifenlauffläche übereinstimmt, und Bestimmen der Anzahl von Teilungssegmenten jeder Teilungslänge (L1, L2, L3);
Bestimmen zweiter Kombinationen von Teilungssegmenten, bei denen die Summe der Teilungslängen der Teilungssegmente, die eine Vielzahl von Teilungslängen haben, im wesentlichen übereinstimmt mit der inneren Umfangslänge (L) eines Sektorelements (36) unter einer Vielzahl von Sektorelementen, die durch im wesentlichen gleichmäßige Teilung einer bei der Reifenvulkanisation verwendeten, mehrteiligen Form (35) gebildet werden; und
Addieren der zweiten Kombinationen aller Sektorelemente (36), die die mehrteilige Form (35) darstellen, um dritte Kombinationen von Teilungssegmenten zu bestimmen, bei denen die Summe der zweiten Kombinationen von Teilungssegmenten mit der Anzahl von Teilungssegmenten jeder Teilungslänge (L1, L2, L3) übereinstimmt.

2. Verfahren gemäß Anspruch 1, dadurch gekennzeichnet, daß die Teilungssegmente jedes Sektorelements auf der Grundlage der dritten Kombinationen in geeigneter Weise ausgewählt werden, und in der Umfangsrichtung angeordnet werden, woraus eine Anordnung bestimmt wird, bei der die Teilungslänge des Teilungssegments in der Reihenfolge Minimum. Maximum, Minimum ... wiederholt geändert wird.

## Revendications

1. Procédé de production d'un profil de la bande de roulement par agencement successif de plusieurs segments de pas (15, 16, 17) ayant plusieurs longueurs de pas (L1, L2, L3), chaque segment de pas comportant au moins trois lamelles (30), de sorte que chaque lamelle comporte une composante circonférentielle, les deux extrémités correspondantes se terminant à l'intérieur des deux extrémités du segment de pas, dans une partie de la bande de roulement (12) comportant au moins deux rainures principales (22, 23) dans la direction circonférentielle du pneumatique, comprenant les étapes ci-dessous:
détermination de premières combinaisons de segments de pas, dans lesquelles la somme des longueurs de pas des segments de pas ayant plusieurs longueurs de pas coïncide pratiquement avec la circonférence (T) de la bande de roulement du pneumatique, et détermination du nombre de segments de pas de chaque longueur de pas (L1, L2, L3);
détermination de deuxièmes combinaisons de segments de pas, dans lesquelles la somme des longueurs de pas des segments de pas ayant plusieurs longueurs de pas coïncide pratiquement avec la longueur périphérique interne (L) d'un élément de secteur (36) parmi plusieurs éléments de secteur formés par la division pratiquement égale d'un moule fendu (35) utilisé pour la vulcanisation du pneumatique; et
addition des deuxièmes combinaisons de tous les éléments de secteur (36) constituant le moule fendu (35), pour déterminer des troisièmes combinaisons de segments de pas, dans lesquelles la somme desdites deuxièmes combinaisons de segments de pas coïncide avec ledit nombre de segments de pas de chaque longueur de pas (L1, L2, L3).

2. Procédé selon la revendication 1, caractérisé en ce que les segments de pas de chaque élément de secteur sont sélectionnés de façon appropriée sur la base des troisièmes combinaisons et agencés dans la direction circonférentielle, permettant de déterminer un agencement à changement répété de la longueur de pas du segment de pas dans l'ordre longueur minimale, longueur maximale, longueur minimale...
